(19) Europäisches Patentamt
European Patent Office
Office européen des brevets

(11) **EP 3 151 072 B1**

(12) **EUROPÄISCHE PATENTSCHRIFT**

(45) Veröffentlichungstag und Bekanntmachung des Hinweises auf die Patenterteilung:
**29.07.2020 Patentblatt 2020/31**

(21) Anmeldenummer: **15187247.0**

(22) Anmeldetag: **29.09.2015**

(51) Int Cl.:
***G05B 19/4065*** *(2006.01)*

(54) **VERFAHREN UND SYSTEM ZUR FEHLERERKENNUNG UND ÜBERWACHUNG BEI EINEM ELEKTRONISCH GEREGELTEN ODER GESTEUERTEN MASCHINENTEIL**

METHOD AND SYSTEM FOR ERROR DETECTION AND MONITORING IN AN ELECTRONICALLY CONTROLLED OR REGULATED MACHINE PART

PROCEDE ET SYSTEME DE RECONNAISSANCE DE DEFAUT ET DE SURVEILLANCE POUR UN COMPOSANT DE MACHINE COMMANDE OU REGLE ELECTRONIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**05.04.2017 Patentblatt 2017/14**

(73) Patentinhaber: **Siemens Aktiengesellschaft 80333 München (DE)**

(72) Erfinder:
• **Verma, Amit**
 **12439 Berlin (DE)**
• **Krampe, Detlef**
 **91083 Baiersdorf (DE)**

(56) Entgegenhaltungen:
 DE-A1-102010 063 134 DE-A1-102012 223 249

**Beschreibung**

Die Erfindung betrifft ein Verfahren und ein System zur Fehlererkennung und Überwachung bei einem elektronisch geregelten oder gesteuerten Maschinenteil mit Mitteln zur Erkennung mindestens eines Zustandes anhand von Betriebsparametern oder eines Überwachungsparameters.

Bei elektronisch geregelten oder gesteuerten Maschinenteilen ist es gemäß dem Stand der Technik üblich, dass das Maschinenteil bzw. das Gerät mit dem Maschinenteil betrieben wird, bis sich ein Zustand oder ein Überwachungsparameter außerhalb des Sollbereiches befindet. Hierbei ist es möglich, dass aufgrund der Erkennung eines Zustandes oder des Vorliegens einer Messgröße die Überwachungsparameter verändert werden, um das Gerät besser zu betreiben. Industrielle, elektronisch geregelte oder gesteuerte Maschinenteile können z.B. Pumpen, Motoren, Roboter, Kraniche, usw. oder Maschinenteile wie Frequenzumrichter, programmierbarer Logikleiter usw. sein.

Bei einer Fehlererkennung werden in der Regel verschiedene Messungen zu einer Vielzahl von Zuständen durchgeführt. Jedoch stellt oft die bloße Menge solcher Messungen ein beträchtliches Hindernis bezüglich ihrer effektiven Verwendung bei der Fehlersuche dar. Insgesamt können mehrere Hundert solcher Messungen vorliegen, von denen nur eine Schlüsselmessung die wahre Ursache eines Problems offenbart.

Keine der anderen Messungen liefert unbedingt eine Angabe der Identität dieser Schlüsselmessung. Somit ist eine erfolgreiche Identifizierung der Schlüsselmessung ganz vom Zufall bestimmt, die von einem günstigen Zeitpunkt oder einer umfangreichen und zeitaufwendigen Überprüfung jeder zur Verfügung stehenden Messung abhängt. Zudem gab es bisher keine effektive Art und Weise, eine Zusammenfassung solcher Messungen zu präsentieren.

Normalerweise wird die Fehlererkennung durch Analysieren eines Satzes von Parametern/Messwerten ausgeführt. Für z.B. die Fehlererkennung eines elektrischen Motors werden eine Temperaturanalyse, die Vibrationen an verschiedenen Punkten, der elektrische Strom und der Energieverbrauch usw. gemessen. Die Analyse kann auf einem einfachen Schwellwert/Grenzwert basieren oder auf komplexen künstlichen Intelligenzalgorithmen. Zusätzlich zu den obigen Problemen ergeben sich im Stand der Technik die nachfolgenden zwei Grundprobleme:

1. Zum einen ist es schwierig die (Anfangs)Überwachungskonfiguration zu bestimmen. Das heißt, dass wenn eine Maschine überwacht werden soll, müssen die richtigen Schwellwerte für die verschiedenen überwachten Parameter gesetzt werden. Z.B. muss ein Überwachungssystem für einen Motor so konfiguriert werden, dass ein Alarm ausgegeben wird, wenn der von einem Motor gezogene Strom einen bestimmten Schwellwert, beispielsweise 2,2 Ampere, übersteigt. Da ähnliche Maschinenteile/Maschinen nicht unter denselben Betriebsbedingungen installiert werden können, kann es sein, dass die Schwellwerte selbst für ähnliche Maschinenteile unterschiedlich sind. Für z.B. den Motor, der in einer warmen Umgebung läuft, wird wahrscheinlich eine höhere Temperaturschwelle gesetzt werden, wie für einen Motor, der in einer klimatisierten Umgebung läuft.

2. Zum anderen ist eine fortlaufende Anpassung der Überwachungskonfiguration über die Maschinenteilelebensdauer notwendig. Mit der Alterung der Maschinenteile, d.h. Dauer des Betriebes der Maschine, ändern sich auch die Schwellwerte für die Überwachungsparameter. Beispielsweise ist für einen Motor mit z.B. 1000 Betriebsstunden ein höherer Schwellwert für Vibration zu setzten, als der für einen neuen Motor. Also muss die Überwachungskonfiguration in bestimmten Abständen nachjustiert werden.

Derzeitige Vorgehensweise ist, dass die (Anfangs)Überwachungskonfiguration hauptsächlich statisch und lediglich am Anfang bestimmt wird. Dabei wird die (Anfangs)Überwachungskonfiguration als auch die Anpassung der Überwachungskonfiguration über der Maschinenteilelebensdauer lediglich abhängig von den unterschiedlichen Maschinenteilen und unabhängig von den betrieblichen Parametern (nachfolgend als Betriebsparametern bezeichnet) getroffen. Einflussfaktoren wie Alter der Maschine, Einsatzbedingung der Maschine etc. werden bisher nicht berücksichtigt.

Die Offenlegungsschrift DE 102012223249 A1 offenbart ein Verfahren zum automatisierten Überwachen eines Betriebszustandes eines Haushaltsgerätes. Das Verfahren umfasst die Schritte Empfangen eines aktuellen Geräteparameters, welcher einen Betrieb des Haushaltsgerätes betrifft, automatisches Vergleichen des aktuellen Geräteparameters mit einem vorgespeicherten Geräteparameter, und Erzeugen eines Hinweissignals bei einer Abweichung des aktuellen Geräteparameters von dem vorgespeicherten Geräteparameter.

Es ist daher eine erste Aufgabe ein verbessertes Verfahren zur Fehlererkennung und Überwachung bei einem elektronisch geregelten oder gesteuerten Maschinenteil in einem industriellen Prozess anzugeben. Es ist daher eine zweite Aufgabe ein solches System anzugeben, welches insbesondere zur Durchführung des erfindungsgemäßen Verfahrens geeignet ist.

Die auf das Verfahren bezogene Aufgabe wird gelöst durch die Angabe eines Verfahrens zur Fehlererkennung und Überwachung bei einem elektronisch geregelten oder gesteuerten Maschinenteil mit Mitteln zur Erkennung von Betriebsparametern und Überwachungsparametern, mit den Schritten:

- Erfassen und Speichern der Betriebsparameter und der Überwachungsparameter von Maschinenteilen,
- Bestimmen zumindest einer Vergleichsgruppe von vergleichbaren Maschinenteilen und vergleichbaren Betriebsparametern anhand der erfassten Betriebsparameter und des Maschinenteils,

- Anwendung eines statistischen Analyseverfahrens zum Erstellen zumindest eines Schwellwertes anhand der definierten Vergleichsgruppe und Erkennen von Abweichungen zumindest eines Zustandes oder zumindest eines Überwachungsparameters anhand des Schwellwertes und Zuordnung der Abweichung zu dem Maschinenteil.

Die auf das System bezogene Aufgabe wird gelöst durch die Angabe eines Systems zur Fehlererkennung und Überwachung bei einem elektronisch geregelten oder gesteuerten Maschinenteil mit Mitteln zur Erkennung von Betriebsparametern und Überwachungsparametern, wobei

- eine Erfassung und eine Speicherung der Betriebsparameter und der Überwachungsparameter von Maschinenteilen vorgesehen ist,
- zumindest eine Vergleichsgruppe von vergleichbaren Maschinenteilen und vergleichbaren Betriebsparametern anhand der erfassten Betriebsparameter und des Maschinenteils bestimmbar ist,
- ein statistisches Analyseverfahren zum Erstellen zumindest eines Schwellwertes anhand der definierten Vergleichsgruppe und zum Erkennen von Abweichungen zumindest eines Zustandes oder zumindest eines Überwachungsparameters anhand des Schwellwertes vorgesehen ist und eine Zuordnung der Abweichung zu dem Maschinenteil vorgesehen ist.

Erfindungsgemäß wird nun eine Gruppe von vergleichbaren Maschinenteilen als Ausgangsniveau für die Beurteilung der einzelnen Maschinenteile innerhalb der Gruppe hinsichtlich der Fehlererkennung in Bezug auf die Überwachungsparameter und der Betriebsparameter verwendet.

Mit dem oben beschriebenen Verfahren und System kann der Schwellwert und die Konfiguration dynamisch berechnet werden, und somit die Abweichung besser bestimmt werden, ohne dass das Maschinenteil genau bekannt sein muss.

Mit dem oben beschriebenen Verfahren und System müssen zudem die Überwachungskonfigurationen nicht über die Zeit manuell eingestellt/geeicht werden. Alle Faktoren wie Alter, Abnutzung usw. von der Maschine werden durch die Erfindung, d.h. dem erfindungsgemäßen gruppenbasierten Ansatz, in Betracht gezogen bzw. bei der Berechnung miteinkalkuliert. Somit ist ein sicherer und verbesserter Betrieb der Maschine über die gesamte Lebensdauer möglich.

Die Erfindung mit dem gruppenbasierten Ansatz stellt damit eine wichtige Entwicklung hinsichtlich der Fehlererkennung und Zustandsüberwachung von Maschinen in verschiedenen Anlagen dar.

In den Unteransprüchen sind weitere vorteilhafte Maßnahmen aufgelistet, die beliebig miteinander kombiniert werden können, um weitere Vorteile zu erzielen.

Bevorzugt werden die Betriebsparameter und/oder die Überwachungsparameter in einer Cloud gespeichert. Dort kann auch die Anwendung/Bearbeitung stattfinden, z.B. von einem externen Anbieter. Auch ist selbstverständlich eine lokale Speicherung auf einem vernetzten oder nicht vernetzten Rechner möglich.

In einer bevorzugten Ausgestaltung werden die Betriebsparameter bei Inbetriebnahme zumindest des Maschinenteils erfasst und gespeichert. Dies kann manuell von einem Bediener vorgenommen werden, oder automatisiert von Sensoren bewerkstelligt werden. Auch können die Betriebsparameter einmalig oder kontinuierlich erfasst und gespeichert werden.

Bevorzugt sind zumindest zwei Maschinenteile in einer Vergleichsgruppe, die nicht an demselben Ort betrieben werden.

In einem bevorzugten Ausführungsbeispiel wird die Bestimmung der Vergleichsgruppe anhand eines Vergleichsgruppierungsalgorithmus bewerkstelligt, wobei ein unterschiedlicher Vergleichsgruppierungsalgorithmus bei unterschiedlichen Maschinen verwendet wird. Dieser kann zudem gewichtet sein. Beispiele, wie eine Vergleichsgruppe wählbar ist, sind in der Figurenbeschreibung aufgelistet.

Bevorzugt wird die Art und optional der Umfang der Abweichung übermittelt. Dadurch können Gegenmaßnahmen einfacher eingeleitet werden. So kann bei gravierender Abweichung das Maschinenteil bzw. die Maschine sofort abgestellt werden. Auch kann das Maschinenteil mit geänderten oder eingeschränkten Überwachungsparameter weiter betrieben werden. So kann z.B. bei heißen Temperaturen die Drehzahl eines Motors nach entsprechender Anpassung der Überwachungsparameter heruntergesetzt/angepasst werden, um einen zuverlässigeren Betrieb zu gewährleisten.

Bevorzugt wird durch das statistische Analyseverfahren für jeden Überwachungsparameter ein Schwellwert festgelegt, wobei die Abweichung anhand eines Vergleichs des Überwachungsparameters mit dem Schwellwert bestimmt wird. Das Analyseverfahren kann jedes beliebige geeignete Analyseverfahren sein und auch gewichtete Faktoren aufweisen.

Bevorzugt wird eine Fehlerfunktion zumindest des Maschinenteils berechnet und mittels des statistischen Analyseverfahrens eine Funktion als Schwellwert bestimmt, bei der das Maschinenteil ohne Abweichung, d.h. ohne Fehler im Betrieb ist. Dabei ist zu Beachten, dass die Maschine bzw. das Maschinenteil unter bzw. mit den jeweiligen Betriebsparametern ohne Fehler bzw. ohne Abweichung läuft.

Weitere Merkmale, Eigenschaften und Vorteile der vorliegenden Erfindung ergeben sich aus der nachfolgenden Beschreibung unter Bezugnahme auf die beiliegende Figur. Darin zeigt schematisch

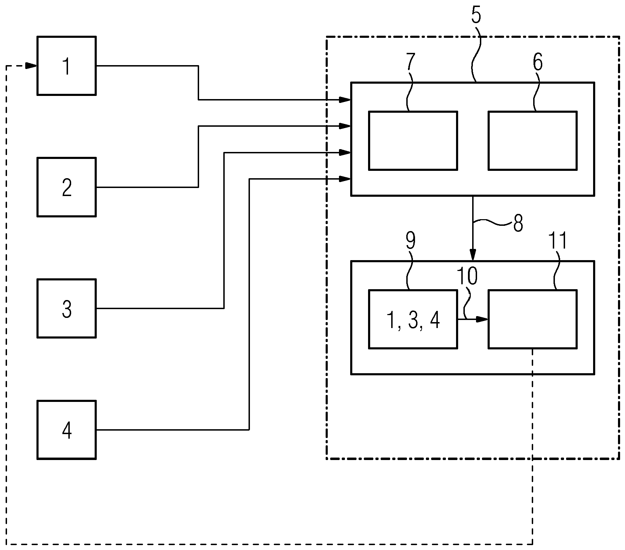

FIG 1    das erfindungsgemäße Verfahren.

Obwohl die Erfindung im Detail durch das bevorzugte Ausführungsbeispiel näher illustriert und beschrieben wurde, ist die Erfindung nicht durch das offenbarte Beispiel eingeschränkt. Variationen hiervon können vom Fachmann abgeleitet werden, ohne den Schutzumfang der Erfindung, wie er durch die nachfolgenden Patentansprüche definiert wird, zu verlassen.

Erfindungsgemäß werden zunächst in einem ersten Schritt die Betriebsparameter und die Überwachungsparameter der überwachten Maschinenteile erfasst und gespeichert. Dies bedeutet, dass zusätzlich zu den Überwachungsparametern die Betriebsparameter erfasst und damit zur Beurteilung einer Abweichung herangezogen werden. Diese Betriebsparameter können z.B. Umweltparameter, Standort, Art der Last, Art der Anwendung, etc. sein. Als Überwachungsparameter kann beispielsweise die Temperatur etc. genannt werden. Diese Information kann in einer lokalen Datenbank, welche sich z.B. am Ort befindend, oder in einer Cloud gespeichert werden. Dabei kann eine Erfassung der Betriebsparameter bei Inbetriebnahme vorgenommen werden. D.h. die Erfassung der Betriebsparameter kann einmalig bei Inbetriebnahme der Maschine bzw. des Maschinenteils ein oder auf einer fortlaufenden Basis stattfinden. Ebenso kann sie automatisiert durch Sensoren oder andere Messgeräte und/oder manuell von einem Bediener vorgenommen werden.

In einem zweiten Schritt wird anhand der erfassten Betriebsparameter und des Maschinenteils zumindest eine Vergleichsgruppe, d.h. eine Familie von vergleichbaren bzw. ähnlichen Maschinenteilen mit vergleichbaren bzw. ähnlichen Betriebsparametern bestimmt.

Die Maschinenteile in einer Vergleichsgruppe müssen nicht unbedingt an demselben physischen Ort sein. Einige Beispiele für Gruppierung sind nachfolgend gegeben:

i) Gleiche oder ähnliche Maschinenteile von einer spezifischen Produktfamilie von einem spezifischen Hersteller, z.B. Maschinenteile von einer spezifischen Produktfamilie eines Automobilherstellers,
ii) Maschinenteile von einer spezifischen Produktfamilie von einem spezifischen Hersteller, wobei die Maschinenteile ähnliche Aufgaben (z.B. Schweißen) übernehmen,
iii) Maschinenteile von demselben Typ, die unter gleichen Umgebungsbedingungen laufen, z.B. elektrische Motoren von demselben Typ, z.B. einer Pumpe, die draußen im Freien in einer chemischen Raffinerie eingesetzt wird,
iv) Maschinenteile von demselben Typ und derselben Anwendung, die jedoch an verschiedenen Kundenstandorten eingesetzt wird, z.B. ein Getriebe desselben Typs von einem speziellen Hersteller für Druckanwendungen, welche an verschiedenen Kundenstandorten eingesetzt wird.

Es ist zu beachten, dass diese Aufzählung nur als Veranschaulichung dient und weder vollständig noch abschließend ist.

Der Vergleichsgruppierungsalgorithmus für die Einteilung der Vergleichsgruppen kann sich von Fall zu Fall unterscheiden. Der Vergleichsgruppierungsalgorithmus kann über ein EDV-Gerät oder als eine Anwendung in einer Cloud durchgeführt werden.

In einem dritten Schritt wird ein statistisches Analyseverfahren zum Erstellen zumindest eines Schwellwertes der Vergleichsgruppe und zum Erkennen von Abweichungen mindestens eines Zustandes oder eines Überwachungsparameter anhand des Schwellwertes angewandt. Anschließend wird die Abweichung zu einem Maschinenteil zugeordnet.

Dies wird an folgendem Beispiel demonstriert. Hierbei gibt es eine Vergleichsgruppe von 'N' Maschinenteilen, hier z.B. elektrischen Motoren. Dabei wurde die Vergleichsgruppe wie in Schritt zwei beschrieben erstellt. Die Fehlererkennung bzw. Abweichung soll nun anhand von einem Satz von drei Überwachungsparametern $T_{wi}$, $A_{si}$, $I_{wi}$ durchgeführt werden. Diese sind beispielsweise:
die Motoren-Wicklungstemperatur: $T_{wi}$ die Beschleunigung der Kupplungswelle: $A_{si}$ der Wicklungsstrom: $I_{wi}$
mit i = 1, 2, 3, .. N.

Zur Erkennung einer Abweichung wird nun ein statistisches Analyseverfahren durchgeführt. Hierzu wird eine Fehlerfunktion $f_i$ eines jeden Motors i=1, 2, 3..., N innerhalb der Vergleichsgruppe berechnet:

$$1) \qquad\qquad f_i = \alpha * T_{wi} + \beta * A_{si} + \pi * I_{wi}$$

wobei $\alpha, \beta, \pi$ die Gewichtungen für die Motoren-Wicklungstemperatur $T_{wi}$, die Beschleunigung der Kupplungswelle $A_{si}$ und den Wicklungsstrom $I_{wi}$ darstellen.

Nun wird eine Funktion $f_{normal}$ bestimmt, bei der das Maschinenteil ohne Abweichung, d.h. ohne Fehler im Betrieb ist. Dazu werden die Durchschnittswerte $T_{w,avg}, A_{s,avg}, I_{w,avg}$ der Überwachungsparameter aller $N$ Maschinen in der Vergleichsgruppe bestimmt:

$$2) \qquad\qquad T_{w,avg} = \frac{(T_{w1} + T_{w2} + T_{w3} + \dots T_{wN})}{N}$$

$$3) \qquad\qquad A_{s,avg} = \frac{(A_{s1} + A_{s2} + A_{s3} + \dots A_{sN})}{N}$$

$$4) \qquad\qquad I_{w,avg} = \frac{(I_{w1} + I_{w2} + I_{w3} + \dots I_{wN})}{N}$$

Damit ergibt sich $f_{normal}$:

$$5) \qquad\qquad f_{normal} = \alpha * T_{w,avg} + \beta * A_{s,avg} + \pi * I_{w,avg}$$

Der berechnete Wert $f_{normal}$ kann daher als Schwellwert für eine Abweichung der Überwachungsparameter innerhalb der Vergleichsgruppe herangezogen werden.

Um Fehler bzw. Abweichungen zu erkennen, müssen daher lediglich die berechnete Fehlerfunktion $f_i$ eines jeden Motors N innerhalb der Vergleichsgruppe gegen den Schwellwert $f_{normal}$ verglichen werden.

Dieser Ansatz kann leicht auf mehr als drei Überwachungsparameter verallgemeinert werden. Das Beispiel oben verwendet ein einfaches Durchschnittsanalyseverfahren. Weitere komplexe statistische Analyseverfahren können jedoch auf eine ähnliche Art verwendet werden.

Das Verfahren/System kann lokal auf einem Rechner oder als Anwendung in einer Cloud durchgeführt werden.

Dies soll anhand der FIG 1 nun nochmal schematisch gezeigt werden.

Eine Anzahl von Maschinenteilen 1 bis 4 meldet ihre Daten, d.h. die Betriebsparameter 6 und die Überwachungsparameter 7 bei einer Datenbank 5 über ein geeignetes Mittel an. Diese Datenbank speichert die Betriebsparameter 6 und die Überwachungsparameter 7. Dabei können die Betriebsparameter 7, insbesondere bei Inbetriebnahme, erfasst und gespeichert werden. Die Erfassung kann beispielsweise über Sensoren vorgenommen werden, die Betriebsparameter 6 können auch vom Bediener händisch eingegeben werden.

Ein Vergleichsgruppierungsalgorithmus 8 bestimmt nun eine Vergleichsgruppe 9 von vergleichbaren Maschinenteilen und vergleichbaren Betriebsparametern anhand der erfassten Betriebsparameter 9 und des Maschinenteils. Dieses zu vergleichende Maschinenteil wird hier mit der Nummer 1 gekennzeichnet. Als vergleichbare Maschinenteile werden hier die Maschinenteile 3,4 herangezogen. Ist nun die Vergleichsgruppe gebildet, so wird anhand eines statistischen Analyseverfahrens 10 ein Schwellwert 11, z.B. durch obige Funktion, berechnet. Mit Hilfe dieses Schwellwertes 11 können nun Fehler bzw. Abweichungen der relevanten Überwachungsparameter 7 des Maschinenteils 1 festgestellt werden. Mit Hilfe dieser Abweichungen kann z.B. eine Wartung angeordnet werden, oder das Maschinenteil 1 mit anderen Parametern betrieben werden. Selbstverständlich kann mit den Maschinenteilen 3 und 4 analog verfahren werden. Auch kann ein Alarm bei zu hoher Abweichung ausgegeben/angezeigt werden.

Erfindungsgemäß werden nun alle Faktoren wie Alter, Abnutzung usw. von der Maschine durch die Erfindung in Betracht gezogen bzw. bei der Berechnung miteinkalkuliert. Auch werden die Betriebsparameter erfindungsgemäß mit in Betracht gezogen. Durch den erfindungsgemäßen gruppenbasierten Ansatz ist eine einfache Fehlererkennung ohne großen Aufwand möglich.

**Patentansprüche**

1. Verfahren zur Fehlererkennung und Überwachung bei einem elektronisch geregelten oder gesteuerten Maschinenteil (1) mit Mitteln zur Erkennung von Betriebsparametern (6) und Überwachungsparametern (7), **gekennzeichnet, durch**

   - Erfassen und Speichern der Betriebsparameter (6) und der Überwachungsparameter (7) von Maschinenteilen (1,2,3,4),
   - Bestimmen zumindest einer Vergleichsgruppe (8) von vergleichbaren Maschinenteilen (1,3,4) und vergleichbaren Betriebsparametern anhand der erfassten Betriebsparameter (6) und des Maschinenteils (1),
   - Anwendung eines statistischen Analyseverfahrens (10) zum Erstellen zumindest eines Schwellwertes (11) anhand der definierten Vergleichsgruppe (9) und zum Erkennen von Abweichungen zumindest eines Zustandes oder zumindest eines Überwachungsparameters (7) anhand des Schwellwertes (11) und Zuordnung der Abweichung zu dem Maschinenteil (1).

2. Verfahren zur Fehlererkennung und Überwachung nach Anspruch 1, **dadurch gekennzeichnet, dass** die Betriebsparameter (6) und/oder die Überwachungsparameter (7) in einer Cloud gespeichert werden.

3. Verfahren zur Fehlererkennung und Überwachung nach Anspruch 1 oder 2, **dadurch gekennzeichnet, dass** die Betriebsparameter (6) bei Inbetriebnahme zumindest des Maschinenteils (1) erfasst und gespeichert werden.

4. Verfahren zur Fehlererkennung und Überwachung nach einem der vorhergehenden Ansprüche, **dadurch gekennzeichnet, dass** die Betriebsparameter (6) einmalig oder kontinuierlich erfasst und gespeichert werden.

5. Verfahren zur Fehlererkennung und Überwachung nach einem der vorhergehenden Ansprüche, **dadurch gekennzeichnet, dass** zumindest zwei Maschinenteile (1, 3,4) in einer Vergleichsgruppe (9) nicht an demselben Ort betrieben werden.

6. Verfahren zur Fehlererkennung und Überwachung nach einem der vorhergehenden Ansprüche, **dadurch gekennzeichnet, dass** die Bestimmung der Vergleichsgruppe (9) anhand eines Vergleichsgruppierungsalgorithmus (8) bewerkstelligt wird, wobei ein unterschiedlicher Vergleichsgruppierungsalgorithmus (8) bei unterschiedlichen Maschinenteilen (1) verwendet wird.

7. Verfahren zur Fehlererkennung und Überwachung nach einem der vorhergehenden Ansprüche, **dadurch gekennzeichnet, dass** die Art und optional der Umfang der Abweichung übermittelt wird.

8. Verfahren zur Fehlererkennung und Überwachung nach einem der vorhergehenden Ansprüche, **dadurch gekennzeichnet, dass** das Maschinenteil (1) mit geänderten oder eingeschränkten Überwachungsparameter (7) weiter betrieben wird.

9. Verfahren zur Fehlererkennung und Überwachung nach einem der vorhergehenden Ansprüche, **dadurch gekennzeichnet, dass** durch das statistische Analyseverfahren (10) für jeden Überwachungsparameter (7) ein Schwellwert (11) festgelegt wird und die Abweichung anhand eines Vergleichs des Überwachungsparameters (7) mit dem Schwellwert (11) bestimmt wird und wobei das statistische Analyseverfahren (10) gewichtete Faktoren aufweist.

10. Verfahren zur Fehlererkennung und Überwachung nach einem der vorhergehenden Ansprüche, **dadurch gekennzeichnet, dass** das statistische Analyseverfahren (10) in Abhängigkeit des Maschinenteils (1) gewichtete Faktoren aufweist.

11. Verfahren zur Fehlererkennung und Überwachung nach einem der vorhergehenden Ansprüche, **dadurch gekennzeichnet, dass** eine Fehlerfunktion ($f_i$) zumindest des Maschinenteils (1) berechnet wird sowie mittels des statistischen Analyseverfahrens (10) eine Funktion ($f_{normal}$) als Schwellwert (11) bestimmt wird, bei der das Maschinenteil (1) ohne Abweichung, d.h. ohne Fehler im Betrieb ist.

**12.** System zur Fehlererkennung und Überwachung bei einem elektronisch geregelten oder gesteuerten Maschinenteil (1) mit Mitteln zur Erkennung von Betriebsparametern (6) und Überwachungsparametern (7), **dadurch gekennzeichnet, dass**

- eine Erfassung und eine Speicherung der Betriebsparameter (6) und der Überwachungsparameter (7) von Maschinenteilen (1,2,3,4) vorgesehen ist,
- zumindest eine Vergleichsgruppe (9) von vergleichbaren Maschinenteilen (1,3,4) und vergleichbaren Betriebsparametern anhand der erfassten Betriebsparameter (6) und des Maschinenteils (1) bestimmbar ist,
- ein statistisches Analyseverfahren (10) zum Erstellen zumindest eines Schwellwertes (11) anhand der definierten Vergleichsgruppe (9) und zum Erkennen von Abweichungen zumindest eines Zustandes oder zumindest eines Überwachungsparameters (7) anhand des Schwellwertes (11) vorgesehen ist und eine Zuordnung der Abweichung zu dem Maschinenteil (1) vorgesehen ist.

**13.** System zur Fehlererkennung und Überwachung nach Anspruch 12, **dadurch gekennzeichnet, dass** die Mittel die Betriebsparameter (6) bei Inbetriebnahme zumindest des Maschinenteils (1) erfassen und speichern.

**14.** System zur Fehlererkennung und Überwachung nach Anspruch 12 oder 13, **dadurch gekennzeichnet, dass** das statistische Analyseverfahren (10) für jeden Überwachungsparameter (7) einen Schwellwert (11) festlegt und die Abweichung anhand eines Vergleichs des Überwachungsparameters (7) mit dem Schwellwert (11) bestimmbar ist und wobei das statistische Analyseverfahren (10) gewichtete Faktoren aufweist.

**15.** System zur Fehlererkennung und Überwachung nach einem der Ansprüche 12 bis 14, **dadurch gekennzeichnet, dass** ein Alarmsystem vorgesehen ist, zum Ausgeben eines Alarms bei einer Abweichung, insbesondere wenn die Abweichung einen vordefinierten Wert überschreitet.

**16.** System zur Fehlererkennung und Überwachung nach einem der Ansprüche 12 bis 15, **dadurch gekennzeichnet, dass** eine Berechnung einer Fehlerfunktion ($f_i$) zumindest des Maschinenteils (1) vorgesehen ist und mittels des statistischen Analyseverfahrens (10) eine Funktion ($f_{normal}$) als Schwellwert (11) bestimmbar ist, bei der das Maschinenteil (1) ohne Abweichung, d.h. ohne Fehler im Betrieb ist.


**Claims**

**1.** Method for error detection and monitoring for an electronically closed-loop or open-loop controlled machine part (1) with means for detecting operating parameters (6) and monitoring parameters (7), **characterised by**

- recording and storing the operating parameters (6) and the monitoring parameters (7) of machine parts (1,2,3,4),
- determining at least one comparison group (8) of comparable machine parts (1,3,4) and comparable operating parameters based on the recorded operating parameters (6) and the machine part (1) to be compared,
- using a statistical analysis procedure (10) for creating at least one threshold value (11) based on the defined comparison group (9) and for detecting variances of at least one state or at least one monitoring parameter (7) based on the threshold value (11) and assignment of the variance to the machine part (1).

**2.** Method for error detection and monitoring according to claim 1, **characterised in that** the operating parameters (6) and/or the monitoring parameters (7) are stored in a cloud.

**3.** Method for error detection and monitoring according to claim 1 or 2, **characterised in that** the operating parameters (6) are recorded and stored at the time of commissioning at least of the machine part (1).

**4.** Method for error detection and monitoring according to one of the preceding claims, **characterised in that** the operating parameters (6) are recorded and stored on a one-off basis or continuously.

**5.** Method for error detection and monitoring according to one of the preceding claims, **characterised in that** at least two machine parts (1,3,4) in a comparison group (9) are not operated at the same location.

6. Method for error detection and monitoring according to one of the preceding claims, **characterised in that** the determination of the comparison group (9) is carried out based on a comparison grouping algorithm (8), wherein a different comparison grouping algorithm (8) is used for different machine parts (1).

7. Method for error detection and monitoring according to one of the preceding claims, **characterised in that** the nature and optionally the extent of the variance are notified.

8. Method for error detection and monitoring according to one of the preceding claims, **characterised in that** the machine part (1) continues to be operated with changed or restricted monitoring parameters (7).

9. Method for error detection and monitoring according to one of the preceding claims, **characterised in that** thanks to the statistical analysis procedure (10) a threshold value (11) is established for each monitoring parameter (7) and the variance is determined based on a comparison of the monitoring parameter (7) with the threshold value (11) and wherein the statistical analysis procedure (10) has weighted factors.

10. Method for error detection and monitoring according to one of the preceding claims, **characterised in that** the statistical analysis procedure (10) has weighted factors as a function of the machine part (1).

11. Method for error detection and monitoring according to one of the preceding claims, **characterised in that** an error function ($f_i$) at least of the machine part (1) is calculated and by means of the statistical analysis procedure (10) a function ($f_{normal}$) is determined as a threshold value (11), in which the machine part (1) is in operation without any variance, i.e. without errors.

12. System for error detection and monitoring for an electronically closed-loop or open-loop controlled machine part (1) with means for detecting operating parameters (6) and monitoring parameters (7), **characterised in that**

   - provision is made for recording and storing the operating parameters (6) and the monitoring parameters (7) of machine parts (1,2,3,4),
   - at least one comparison group (9) of comparable machine parts (1,3,4) and comparable operating parameters based on the recorded operating parameters (6) and the machine part (1) can be determined,
   - a statistical analysis procedure (10) is provided for creating at least one threshold value (11) based on the defined comparison group (9) and detecting variances of at least one state or at least one monitoring parameter (7) based on the threshold value (11) and assignment of the variance to the machine part (1).

13. System for error detection and monitoring according to claim 12, **characterised in that** the means records and stores the operating parameters (6) at the time of commissioning at least of the machine part (1).

14. System for error detection and monitoring according to claim 12 or 13, **characterised in that** the statistical analysis procedure (10) establishes a threshold value (11) for each monitoring parameter (7) and the variance can be determined based on a comparison of the monitoring parameter (7) with the threshold value (11) and wherein the statistical analysis procedure (10) has weighted factors.

15. System for error detection and monitoring according to one of claims 12 to 14, **characterised in that** an alarm system is provided, for outputting an alarm in the event of a variance, in particular if the variance exceeds a predefined value.

16. System for error detection and monitoring according to one of claims 12 to 15, **characterised in that** a calculation of an error function ($f_i$) at least of the machine part (1) is provided for and by means of the statistical analysis procedure (10) a function ($f_{normal}$) can be determined as a threshold value (11), in which the machine part (1) is in operation without any variance, i.e. without errors.

**Revendications**

1. Procédé de détection de défaut et de contrôle d'une partie (1) de machine régulée ou commandée électroniquement, comprenant des moyens de détection de paramètres (6) de fonctionnement et de paramètres (7) de contrôle, **caractérisé par**

   - le relevé et la mise en mémoire des paramètres (6) de fonctionnement et des paramètres (7) de contrôle de parties (1, 2, 3, 4) de la machine,
   - la détermination d'au moins un groupe (8) de comparaison de parties (1, 3, 4) comparables de la machine et de paramètres comparables de fonctionnement à l'aide des paramètres (6) de fonctionnement relevés et de la partie (1) de la machine,
   - l'utilisation d'un procédé (10) d'analyse statistique pour établir au moins une valeur (11) de seuil à l'aide du groupe de comparaison défini et de détection d'écarts d'au moins un état ou d'au moins un paramètre (7) de contrôle à l'aide de la valeur (11) de seuil et l'association de l'écart à la partie (1) de la machine.

2. Procédé de détection de défaut et de contrôle suivant la revendication 1, **caractérisé en ce que** l'on met les paramètres (6) de fonctionnement et/ou les paramètres (7) de contrôle en mémoire dans un nuage.

3. Procédé de détection de défaut et de contrôle suivant la revendication 1 ou 2, **caractérisé en ce que** l'on relève et on met en mémoire les paramètres (6) de fonctionnement lors de la mise en service au moins de la partie (1) de la machine.

4. Procédé de détection de défaut et de contrôle suivant l'une des revendications précédentes, **caractérisé en ce que** l'on relève et on met en mémoire les paramètres (6) de fonctionnement une seule fois ou en continu.

5. Procédé de détection de défaut et de contrôle suivant l'une des revendications précédentes, **caractérisé en ce que** l'on ne fait pas fonctionner au même endroit au moins deux parties (1, 3, 4) de la machine d'un groupe (9) de comparaison.

6. Procédé de détection de défaut et de contrôle suivant l'une des revendications précédentes, **caractérisé en ce que** l'on réalise la détermination du groupe (9) de comparaison au moyen d'un algorithme (8) de regroupement de comparaison, un algorithme (8) de regroupement de comparaison différent étant utilisé pour des parties (1) différentes de la machine.

7. Procédé de détection de défaut et de contrôle suivant l'une des revendications précédentes, **caractérisé en ce que** l'on transmet le type et, éventuellement, l'importance de l'écart.

8. Procédé de détection de défaut et de contrôle suivant l'une des revendications précédentes, **caractérisé en ce que** l'on continue à faire fonctionner la partie (1) de la machine avec des paramètres (7) de contrôle modifiés ou limités.

9. Procédé de détection de défaut et de contrôle suivant l'une des revendications précédentes, **caractérisé en ce que**, par le procédé (10) d'analyse statistique, on fixe, pour chaque paramètre (7) de contrôle, une valeur (11) de seuil et on détermine l'écart à l'aide d'une comparaison du paramètre (7) de contrôle à la valeur (11) de seuil et dans lequel le procédé (10) d'analyse statistique a des facteurs pondérés.

10. Procédé de détection de défaut et de contrôle suivant l'une des revendications précédentes, **caractérisé en ce que** le procédé (10) d'analyse statistique a des facteurs pondérés en fonction de la partie (1) de la machine.

11. Procédé de détection de défaut et de contrôle suivant l'une des revendications précédentes,

**caractérisé en ce que**
l'on calcule une fonction ($f_i$) de défaut au moins de la partie (1) de la machine ainsi qu'on détermine, au moyen du procédé d'analyse statistique, une fonction ($f_{normal}$) comme valeur (11) de seuil pour laquelle la partie (1) de la machine est en fonctionnement sans écart, c'est-à-dire sans défaut.

**12.** Système de détection de défaut et de contrôle d'une partie (1) de machine régulée ou commandée électroniquement, comprenant des moyens de détection de paramètres (6) de fonctionnement et de paramètres (7) de contrôle, **caractérisé en ce que**

- il est prévu un relevé et une mise en mémoire des paramètres (6) de fonctionnement et des paramètres (7) de contrôle de parties (1, 2, 3, 4) de la machine,
- au moins un groupe (9) de comparaison de parties (1, 3, 4) comparables de la machine et de paramètres comparables de fonctionnement peut être déterminé à l'aide des paramètres (6) de fonctionnement relevés et de la partie (1) de la machine,
- un procédé (10) d'analyse statistique est prévu pour l'établissement d'au moins une valeur (11) de seuil à l'aide du groupe (9) de comparaison défini et pour la détection d'écarts d'au moins un état ou d'au moins un paramètre (7) de contrôle à l'aide de la valeur (11) de seuil et une association de l'écart à la partie (1) de la machine est prévue.

**13.** Système de détection de défaut et de contrôle suivant la revendication 12, **caractérisé en ce que**
les moyens détectent et mettent en mémoire les paramètres (6) de fonctionnement lors de la mise en service au moins de la partie (1) de la machine.

**14.** Système de détection de défaut et de contrôle suivant la revendication 12 ou 13, **caractérisé en ce que**
le procédé (10) d'analyse statistique fixe une valeur (11) de seuil pour chaque paramètre (7) de contrôle et l'écart peut être déterminé à l'aide d'une comparaison du paramètre (7) de contrôle à la valeur (11) de seuil et dans lequel le procédé (10) d'analyse statistique a des facteurs pondérés.

**15.** Système de détection de défaut et de contrôle suivant l'une des revendications 12 à 14, **caractérisé en ce qu'**
il est prévu un système d'alerte pour émettre une alerte si il y a un écart, notamment si l'écart dépasse une valeur définie à l'avance.

**16.** Système de détection de défaut et de contrôle suivant l'une des revendications 12 à 15, **caractérisé en ce qu'**
il est prévu un calcul d'une fonction ($f_i$) de défaut au moins de la partie (1) de la machine et, au moyen du procédé (10) d'analyse statistique, peut être déterminée une fonction ($f_{normal}$) comme valeur (11) de seuil, pour laquelle la partie (1) de la machine est en fonctionnement sans écart, c'est-à-dire sans défaut.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012223249 A1